# EUROPÄISCHE PATENTANMELDUNG

(11) **EP 1 209 797 A1**
(43) Veröffentlichungstag der Anmeldung: **29.05.2002**
(21) Anmeldenummer: 01440367.9
(22) Anmeldetag: 29.10.2001
(51) Int. Cl.: H02K 1/14, H02K 15/02

(54) **Stator für einen Elektromotor**

(30) Priorität: 16.11.2000 DE 10057123
(71) Anmelder: ALCATEL, 75008 Paris (FR)
(72) Erfinder: Thiele, Frank, 79848 Bonndorf (DE); Kaiser, Bernhard, 79848 Bonndorf (DE)
(74) Vertreter: Rausch, Gabriele, Dr.

(57) **Zusammenfassung**

Die Erfindung betrifft einen Stator für einen Elektromotor, welcher sich durch hohen Füllfaktor, kleinen Wickelkopf und hohem Automatisierungsgrad für die Fertigung auszeichnet, wobei ein Innenring mit radial nach außen abstehenden Polschäften (2), welche erste Polschäfte (2.1) zur Aufnahme von Wicklungen und zwischen diesen angeordnete zweite Polschäfte (2.2) bilden und ein Außenring, der formschlüssig mit stirnseitigen Bereichen der Polschäfte (2) verbindbar ist, vorgesehen sind.

## Beschreibung

Die Erfindung betrifft einen Stator für einen Elektromotor. Aus der DE 198 42 948 A1 ist ein Stator bekannt, bei dem gleichartige, radial abstehende Polschäfte vorgesehen sind. Die Polschäfte sind mit vorab gewickelten Spulen bestückt. Nachteilig bei diesem Statoraufbau sind vor allem der große Wickelkopf, verbunden mit einem geringen Füllfaktor und der geringe Automatisierungsgrad.

Der Erfindung liegt die Aufgabe zugrunde, diese Nachteile zu beseitigen und einen Stator für einen Elektromotor anzugeben, der sich durch einen kleineren Wickelkopf, höherem Füllfaktor und höherem Automatisierungsgrad auszeichnet.

Erfindungsgemäß wird die Aufgabe mit den kennzeichnenden Merkmalen des Anspruchs 1 gelöst. Der Innenring ist mit radial nach außen abstehenden Polschäften versehen, welche direkt bewickelbar sind. Aufsteckbare Spulen entfallen dadurch. Neben der Einsparung von Arbeitsschritten zur Herstellung der Spulen ergibt sich eine sehr kompakte und raumsparende Wicklung, da der gesamte Hohlraum zwischen benachbarten Polschäften für die Wicklung zur Verfügung steht. Der Stator-Innenring wird maschinell von außen bewickelt. Eine Anwendung der bekannten Einziehtechnik, die mit hohen Fertigungskosten durch Handarbeit und mit einem großen Wickelkopf verbunden ist, ist ebensowenig erforderlich wie Nadelwicklertechnik, bei der durch geringeren Füllfaktor eine kleinere Motorleistung resultiert. Der Außenring, der den magnetischen Rückschluss sicherstellt, wird formschlüssig auf die stirnseitigen Bereiche der Polschäfte des bewickelten Innenringes aufgeschoben. Die so hergestellten konzentrierten Pole haben sehr kleine Wickelköpfe und ermöglichen eine sehr kurze Motorbauform mit gutem Wirkungsgrad. Durch den zweiteiligen Ringaufbau und die direkte Polschaftbewicklung von außen sind die Herstellungskosten erheblich geringer als insbesondere bei der bei AC-Statoren üblichen Einziehtechnik.

Gemäß Anspruch 2 sind T-förmig ausgebildete Polschäfte als Aufnahmen für die Wicklungen vorgesehen, wobei Bewicklungsöffnungen verbleiben. Auf diese Weise ergibt sich für den Wicklungsraum eine von den Öffnungen abgesehen feste Begrenzung. Die Wicklungen können den Wicklungsraum vollkommen ausfüllen, wobei Formbeständigkeitsprobleme vermieden sind.

Um den Wicklungsraum auch im Bereich der Öffnungen optimal zu umschließen, ist der Außenring gemäß Anspruch 3 an seiner Innenseite mit entsprechenden Ausformungen ausgestattet. Der als Ruckschlussring fungierende Außenring wird nach dem Wickeln über den als Statorkern fungierenden Innenring geschoben. Durch die zweiteilige Bauform des Stators mit Innenring und Außenring, verbunden mit der Direktbewicklung der Polschäfte ergibt sich eine Minimierung des Kurzschlussflusses. Der Außenring kann eine im Querschnitt kreisrunde Außenperipherie aufweisen. Je nach Verwendung des Motors kann sich ein zusätzliches Motorgehäuse erübrigen. Die kreisrunde Außenperipherie erleichtert außerdem den Einbau des Motors in motorisch angetriebene Vorrichtungen, beispielsweise für einen Jalousieantrieb.

Nachfolgend wird die Erfindung anhand eines figürlich dargestellten Ausführungsbeispiels näher beschrieben. Es zeigen:
- Fig. 1: einen Innenring,
- Fig. 2: einen Außenring und
- Fig. 3: einen Stator mit Innenring und Außenring.

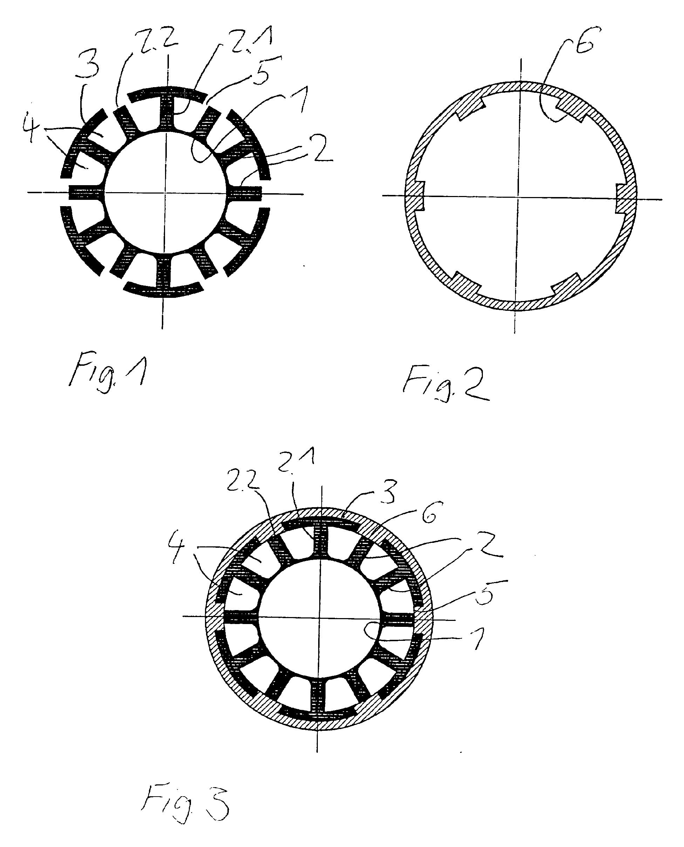

Der in Fig. 1 dargestellte Innenring besteht im wesentlichen aus einem nichtdargestellten Rotor zugewandten und umfangsmäßig miteinander verbundenen Polschuhen 1 und von diesen nach außen abstehenden Polschäften 2. Dargestellt sind zwölf Polschäfte 2, die z.B. vier Polen des Rotors zugeordnet sind. Die Polschäfte 2 sind abwechselnd als zu bewickelnde erste Polschäfte 2.1 und nicht zu bewickelnde zweite Polschäfte 2.2 ausgebildet. Die ersten Polschäfte 2.1 sind mit einem T-Quersteg 3 zur außenseitigen Begrenzung eines Wicklungsraumes 4 versehen, wobei zwischen dem T-Quersteg 3 und dem benachbarten zweiten Polschaft 2.2 jeweils eine Öffnung 5 für den Bewicklungsvorgang verbleibt.

Der in Fig. 2 dargestellte Außenring ist an seiner Innenseite mit Ausformungen 6 versehen, welche genau der äußeren Peripherie des Innenringes entsprechen. Der Außenring lässt sich passgenau auf den Innenring axial aufschieben, wodurch die in Fig. 3 dargestellte Statorausbildung resultiert.

Die Erfindung beschränkt sich nicht auf das vorstehend angegebene Ausführungsbeispiel. Vielmehr ist eine Anzahl von Varianten denkbar, welche auch bei grundsätzlich anders gearteter Ausführung von den Merkmalen der Erfindung Gebrauch machen.

## Patentansprüche

1. Stator für einen Elektromotor,
**gekennzeichnet durch**
- einen Innenring mit radial nach außen abstehenden Polschäften(2), welche erste Polschäfte (2.1) zur Aufnahme von Wicklungen und zwischen diesen angeordnete zweite Polschäfte (2.2) bilden und
- einen Außenring, der formschlüssig mit stirnseitigen Bereichen der Polschäfte (2) verbindbar ist.

2. Stator nach Anspruch 1,
**dadurch gekennzeichnet, dass** die ersten Polschäfte (2.1) die Wicklungen umgreifend T-förmig ausgebildet sind, wobei zwischen den ersten (2.1) und zweiten Polschäften (2.2) Öffnungen (5) für den Bewicklungsvorgang der ersten Polschäfte (2.1) verbleiben.

3. Stator nach Anspruch 2,
**dadurch gekennzeichnet, dass** der Außenring innenseitige, die Polschäfte (2) peripher umgreifende und die Öffnungen (5) verschließende Ausformungen (6) aufweist.
